**Europäisches Patentamt**

**European Patent Office**

**Office européen des brevets**

(19)

(11) Numéro de publication: **0 193 434 B1**

(12) **FASCICULE DE BREVET EUROPEEN**

(45) Date de publication du fascicule du brevet:
05.04.89

(51) Int. Cl.⁴: **B01D 11/04, C25B 11/04**

(21) Numéro de dépôt: **86400212.6**

(22) Date de dépôt: **31.01.86**

(54) Colonne annulaire pulsée d'échange liquide-liquide adaptée à la réalisation simultanée d'une électrolyse.

(30) Priorité: **07.02.85 FR 8501718**

(43) Date de publication de la demande:
**03.09.86 Bulletin 86/36**

(45) Mention de la délivrance du brevet:
**05.04.89 Bulletin 89/14**

(84) Etats contractants désignés:
**DE GB**

(56) Documents cités:
**FR-A- 2 403 809
FR-A- 2 485 941
US-A- 2 400 962
US-A- 2 665 196
US-A- 2 719 797**

(73) Titulaire: **COMMISSARIAT A L'ENERGIE ATOMIQUE, 31/33, rue de la Fédération, F-75015 Paris(FR)**

(72) Inventeur: **Hanssens, Alain, 4 rue Georges Bizet, F-30330 Tresques(FR)**
Inventeur: **Henry, Edouard, 5 rue de Pierrelatte, F-30130 Pont Saint Esprit(FR)**
Inventeur: **Le Bouhellec, Joel, Rue de laCapitelle "Le Bosquet", F-30200 Bagnol sur Ceze(FR)**
Inventeur: **Tachon, Michel, 4 Lotissement l'Olivette, F-30130 Pont Saint Esprit(FR)**

(74) Mandataire: **Mongrédien, André et al, c/o BREVATOME 25, rue de Ponthieu, F-75008 Paris(FR)**

## Description

La présente invention a pour objet une colonne annulaire pulsée pour la mise en contact à contre-courant des deux phases liquides de densités différentes, la phase ayant la densité la plus élevée constituant la phase lourde, tandis qui l'autre phase constitue la phase légère.

Les colonnes pulsées annulaires connues actuellement comportent généralement une enveloppe cylindrique externe d'axe vertical dans laquelle est disposé un tube cylindrique interne délimitant à l'intérieur de la colonne avec l'enveloppe externe un espace annulaire muni d'un garnissage. La colonne comprend, à son extrémité supérieure, des moyens d'introduction de la phase lourde et des moyens d'extraction de la phase légère, et à son extrémité inférieure, des moyens d'introduction de la phase légère et des moyens d'extraction de la phase lourde. La colonne comporte de plus un système de pulsations permettant d'engendrer un mouvement de va-et-vient de l'ensemble des phases présentes dans la colonne. Généralement, le système de pulsations est constitué par une tubulure verticale externe à la colonne, débouchant à la partie inférieure de la colonne en étant en communication avec une source d'air comprimé susceptible d'appliquer une pression périodique en fonction du temps de façon à engendrer un mouvement de va-et-vient de l'ensemble des phases présentes dans la colonne.

Les colonnes annulaires de ce type sont utilisées notamment pour le traitement de solutions de combustibles irradiés par extraction par solvants, car leur géométrie particulière permet d'améliorer la capacité de traitement tout en respectant les impératifs de sûreté nucléaire. Les garnissages utilisés avec de telles colonnes peuvent être constitués par des plateaux perforés occupant totalement la section transversale de la partie annulaire ou par des plateaux ayant alternativement la forme de disques et de couronnes disposés en chicanes dans le sens vertical, comme cela est décrit dans le brevet français FR-A 2 485 941 du 3 juillet 1980 au nom du C.E.A.

L'emploi de garnissages de ce type présente certains inconvénients lorsque l'on veut réaliser simultanément dans la colonne une électrolyse pour obtenir, par exemple par réduction cathodique, une espèce réductrice facilitant la réaction d'extraction.

En effet, de telles colonnes peuvent être utilisés pour l'extraction de l'uranium à partir d'une solution aqueuse de nitrate d'uranyle contenant également du plutonium en utilisant comme phase organique du tributyl phosphate. Dans ces conditions, lorsque la phase organique est dispersée dans la phase aqueuse, on peut favoriser la réaction d'extraction en réalisant simultanément une réduction électrolytique de l'uranium VI en uranium IV qui réduit le plutonium IV en plutonium III non extractible. Une colonne annulaire de ce type dans laquelle on réalise simultanément une électrolyse est décrite en particulier dans le brevet FR-A 2 403 809 déposé par Kernforschungszentrum Karlsruhe G.M.B.H. Cette colonne comprend un garnissage de plateaux perforés disposés entre l'anode centrale qui est constituée par un tube disposé au centre de la colonne et la cathode constituée par l'enveloppe externe de la colonne. Les plateaux perforés peuvent être polarisés cathodiquement et dans ce but ils sont disposés autour de l'anode centrale en étant isolés de celle-ci par des anneaux isolants appropriés.

Cependant, l'utilisation d'un tel garnissage présente certains inconvénients. En effet, les plateaux perforés gênent les dégagements gazeux provenant des réactions électrochimiques se déroulant dans la colonne. De plus, ces plateaux deviennent hydrophiles au cours du temps, ce qui est probablement lié au caractère radioactif des solutions, et ceci diminue sensiblement les performances hydrauliques de la colonne.

Enfin, pour polariser cathodiquement les plateaux, il est nécessaire de disposer des anneaux isolants entre les plateaux et l'anode centrale, ce qui peut conduire à l'accumulation de crasses, notamment de produits de dégradation radiolytique de la phase organique, entraînant un mauvais fonctionnement hydraulique de la colonne.

La présente invention a précisément pour objet une colonne annulaire pulsée comportant un garnissage qui pallie les inconvénients mentionnés ci-dessus.

La colonne pulsée annulaire, selon l'invention, comporte une enveloppe cylindrique externe d'axe vertical dans laquelle est disposé un tube cylindrique vertical délimitant à l'intérieur de la colonne avec l'enveloppe externe un espace annulaire muni d'un garnissage pour la mise en contact à contre-courant de deux phases liquides de densité différente constituées respectivement par une phase lourde et par une phase légère. Cet espace annulaire est muni à son extrémité supérieure de moyens d'introduction de la phase lourde et de moyens d'extraction de la phase légère et il est muni à son extrémité inférieure de moyens d'introduction de la phase légère et de moyens d'extraction de la phase lourde.

Selon l'invention, le garnissage est constitué de plateaux annulaires disposés horizontalement et espacés les uns des autres dans le sens vertical, chacun desdits plateaux étant en contact avec l'enveloppe externe de la colonne et n'occupant qu'une partie de la section tranversale dudit espace annulaire.

Généralement, les plateaux annulaires ont une section telle que le passage annulaire entre les bords des plateaux et le tube central a une largeur représentant environ 5 à 10% du diamètre de la colonne.

L'emploi de tels plateaux permet de faciliter le dégagement gazeux provenant des réactions électrochimiques éventuelles mises en jeu dans la colonne et de limiter ainsi la perte d'efficacité hydraulique. Par ailleurs, dans la cas où la colonne est destinée à la réalisation simultanée d'une électrolyse, l'utilisation de tels plateaux permet d'éviter la présence d'isolants en céramique au niveau du tube cylindrique interne. Ceci simplifie nettement la construction et le montage de la colonne et réduit sensiblement les risques d'accumulation de produits de dégradation de la phase organique.

Selon un mode préféré de réalisation de l'invention, l'enveloppe cylindrique externe et le tube cylindrique interne sont reliés respectivement aux deux pôles d'un générateur de courant électrique de façon à réaliser simultanément une électrolyse dans la colonne.

Généralement, l'enveloppe cylindrique externe constitue la cathode et le tube cylindrique interne constitue l'anode.

De préférence, les plateaux annulaires sont en matériau conducteur de l'électricité, ce qui permet de les polariser cathodiquement lorsque l'enveloppe cylindrique constitue la cathode.

Dans ce cas, les plateaux annulaires sont avantageusement reliés entre eux par l'intermédiaire de tirants en matériau conducteur de l'électricité qui assurent à la fois la cohésion mécanique du garnissage et la conduction électrique de l'ensemble des plateaux.

Les plateaux annulaires et les tirants peuvent être réalisés dans le même matériau conducteur de l'électricité, par exemple en titane ou en tantale. De même, l'enveloppe externe de la colonne peut être réalisée en titane ou en tantale.

Dans le mode de réalisation préféré de l'invention où la colonne peut être utilisée pour réaliser simultanément une électrolyse, le tube cylindrique interne qui constitue l'anode, a une structure composite et comprend au moins trois couches superposées, réalisées en matériaux conducteurs de l'électricité différents, afin d'obtenir simultanément les bonnes propriétés de conduction électrique, de résistance à la corrosion et de résistance mécanique. Ces trois couches superposées peuvent être constituées depuis l'extérieur du tube jusqu'à l'intérieur du tube par une première couche externe d'un métal noble résistant à la corrosion, par une seconde couche en matériau passivable lorsqu'il est polarisé anodiquement et par une troisième couche interne en matériau de résistivité électrique faible pour acheminer le courant électrique sur toute la longueur du tube cylindrique.

Le métal nobel utilisé pour la réalisation de la première couche peut être en particulier du platine non allié ou faiblement allié, ou tout autre métal noble dont la résistance à la corrosion est excellente dans les conditions d'emploi de la colonne.

Le matériau passivable lorsqu'il est polarisé anodiquement peut être constitué par du tantale qui présente la particularité de former un film d'oxyde protecteur, ce qui permet de protéger l'intérieur du tube cylindrique en cas de corrosion localisée importante du métal formant la première couche.

Selon un mode préféré de réalisation de ce tube cylindrique à structure composite, celui-ci comprend quatre couches superposées, réalisées en matériaux conducteurs de l'électricité différents, formées successivement depuis l'extérieur du tube jusqu'à l'intérieur du tube par une première couche externe en métal noble résistant à la corrosion, par une seconde couche en matériau passivable lorsqu'il est polarisé anodiquement, par une troisième couche en matériau présentant une faible résistivité électrique pour acheminer le courant électrique sur toute la longueur du tube en provoquant une chute ohmique faible, et par une quatrième couche interne en matériau métallique présentant une bonne résistance mécanique et assurant la cohésion de l'ensemble.

Les matériaux utilisés pour former la première et la seconde couches peuvent être les mêmes, par exemple du platine pur ou allié et du tantale.

Pour réaliser la troisième couche, on peut utiliser comme métal de résisitivité électrique faible, du cuivre ou de l'aluminium.

La quatrième couche est réalisée avantageusement en titane ou en alliage de titane afin de maintenir la cohésion de l'ensemble et d'éviter notamment les décollements entre le cuivre et le tantale.

Ce tube cylindrique de structure composite, à plusieurs couches superposées, peut être obtenu par co-étirage à froid d'un ensemble de tubes concentriques correspondant aux différentes couches superposées et ayant pratiquement les dimensions finales des couches.

L'épaisseur des différentes couches dépend en particulier, des dimensions du tube cylindrique et des densités de courant appliquées. Généralement la première couche a une épaisseur de 0,2 à 0,5 mm et la deuxième couche a une épaisseur de 0,2 à 1 mm. L'épaisseur de la troisième couche dépend en particulier de la densité de courant utilisé, et elle peut être de 2 à 4 mm. L'épaisseur de la quatrième couche dépend des dimensions du tube et se situe généralement dans la gamme de 3 à 5 mm.

D'autres caractéristiques et avantages de l'invention apparaîtront mieux à la lecture de la description qui suit donnée bien entendu à titre illustratif et non limitatif en référence au dessin annexé sur lequel:

- la figure 1 est une vue en coupe verticale d'une colonne selon l'invention, et
- la figure 2 est une coupe horizontale de l'anode composite utilisée dans la colonne de la figure 1.

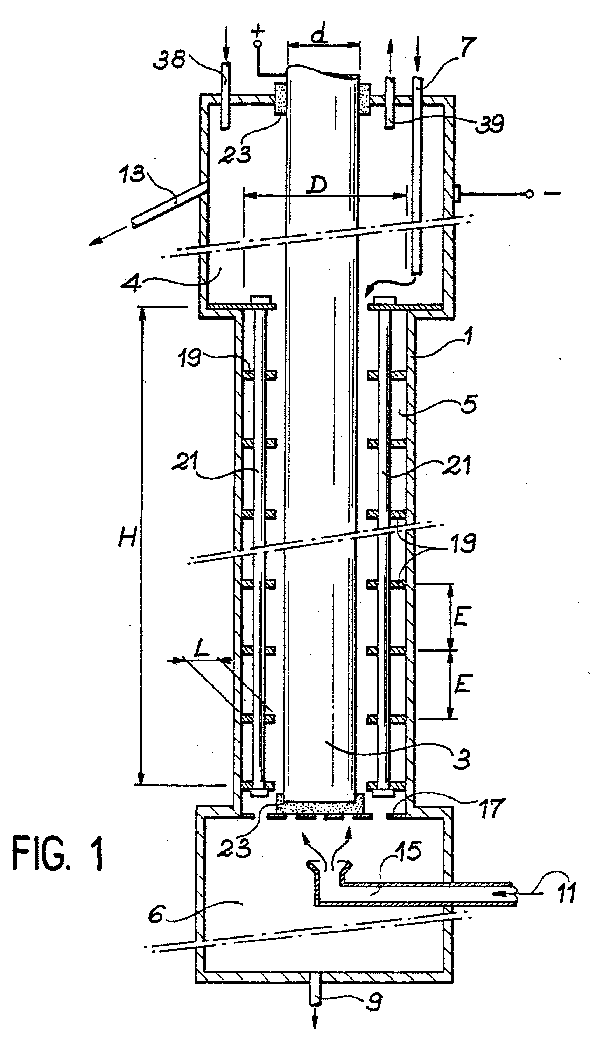

Sur la figure 1, on a représenté une colonne annulaire pulsée selon l'invention, utilisable pour réaliser simultanément une électrolyse. Cette colonne comprend une enveloppe cylindrique externe 1 d'axe vertical à l'intérieur de laquelle est disposé un tube cylindrique 3 d'axe vertical délimitant à l'intérieur de la colonne un espace annulaire 5. Le tube cylindrique 3 peut être relié au pôle positif d'un générateur de courant électrique pour constituer une anode tandis que l'enveloppe externe 1 peut être reliée au pôle négatif du générateur de courant pour constituer la cathode. A ses extrémités inférieure et supérieure, la colonne présente une section plus grande pour favoriser la coalescence ou la décantation des phases en présence et constituer un décanteur haut 4 et un décanteur bas 6. La phase lourde est introduite à l'extrémité supérieure de la colonne par la conduite 7 et elle en est évacuée à l'extrémité inférieure par la conduite 9. La phase légère est introduite à l'extrémité inférieure de la colonne par la conduite 11 et elle est évacuée à l'extrémité supérieure par la conduite 13. Une tubulure 15 située à l'extrémité inférieure de la colonne peut être raccordée à un système pour engendrer des pulsations à l'intérieur de la colonne.

Conformément à l'invention, un garnissage constitué de plateaux annulaires 19 est disposé dans la partie active de la colonne entre l'entrée 7 de la phase lourde et l'entrée 11 de la phase légère. Ces plateaux 19 sont disposés horizontalement et espacés les uns des autres dans le sens vertical. Chaque plateau 19 est en contact avec l'enveloppe externe 1 et il n'occupe qu'une partie de la section transversale de la colonne de façon à ménager entre le tube cylindrique 3 et les plateaux annulaires 19 un espace pour le dégagement des gaz. Des tirants verticaux 21 réalisés en matériau conducteur de l'électricité permettent d'assurer à la fois la cohésion mécanique du garnissage et la conduction électrique pour l'ensemble des plateaux 19. Le tube cylindrique 3 est isolé électriquement de l'enveloppe externe 1 au niveau de décanteur haut 4 et du décanteur bas 6 de la colonne au moyen de pièces isolantes 23 en céramique, qui permettent également de centrer et de supporter le tube cylindrique 3.

Dans le bas de la colonne, à la limite supérieure du décanteur bas, une grille métallique 17 sert à la fois de support du tube anodique 3 et de moyen pour disperser la phase légère introduite dans le décanteur bas en 11. L'isolant 23 isole le tube anodique 3 de la grille 17 reliée au fût cathodique 1.

Au niveau du décanteur haut de la colonne, l'isolation entre le tube anodique 3 et l'enveloppe cathodique 1 est réalisée par l'intermédiaire d'une bride 23 isolante. De plus, sur la partie supérieure du décanteur haut, une entrée d'air (ou de gaz) 38 et une sortie des gaz 39 ont été ajoutées; ceci est indispensable dans la mesure où les dégagements gazeux de procédé sont relativement importants.

Dans cet exemple, l'enveloppe externe 1, les plateaux 19 et les tirants 21 sont réalisés en titane.

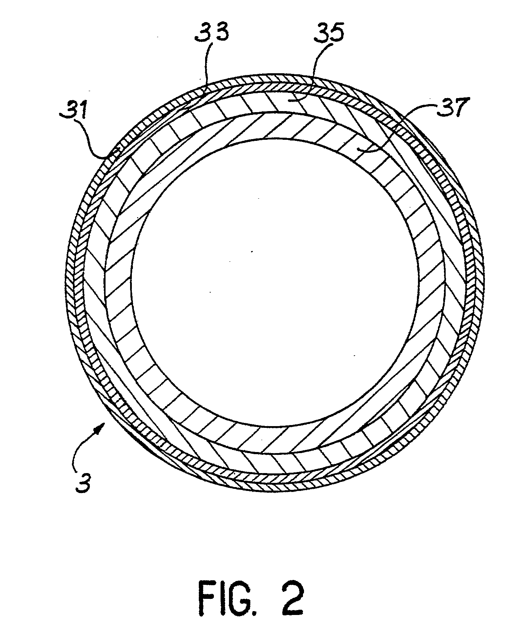

Sur la figure 2, on voit que le tube cylindrique 3 forme une anode composite constituée de quatre couches de matériaux conducteurs de l'électricité superposées, une première couche externe 31 en platine; une second couche 33 en tantale jouant le rôle de protection anodique du tube 3 car le tantale présente la particularité de se passiver lorsqu'il est polarisé anodiquement; une troisième couche 35 en cuivre pour acheminer le courant électrique sur toute la longueur du tube 3 en provoquant une chute ohmique faible; et une quatrième couche 37 en alliage de titane TiA6V pour maintenir la cohésion de l'ensemble du tube, en particulier l'adhérence du cuivre sur le tantale.

Cette structure peut être utilisée en particulier pour séparer l'uranium présent dans une solution nitrique contenant de l'uranium et du plutonium par réduction cathodique de l'uranium VI en uranium IV et extraction de l'uranium dans une phase organique constituée par exemple par du tributyl phosphate, en utilisant des densités de courant anodique de l'ordre de 10 à 50 mA·cm$^{-2}$.

L'exemple suivant est donné à titre non limitatif pour illustrer les résultats obtenus avec le garnissage de l'invention dans une colonne annulaire d'extraction liquide-liquide sans réaliser simultanément une électrolyse.

Dans cet exemple, on a utilisé une colonne en acier inoxydable garnie de plateaux annulaires en acier inoxydable, comportant un tube central en acier inoxydable, et présentant les caractéristiques géométriques suivantes:

— diamétre intérieur de la colonne D: 100 mm,
— diamétre du tube central d: 49 mm,
— largeur des plateaux annulaires L: 17,5 mm,
— espacement longitudinal entre deux plateaux E: 50 mm,
— hauteur du garnissage h: 6 m.

Dans cet exemple, la phase lourde est constituée par une solution aqueuse d'acide nitrique contenant 15 à 20 gl$^{-1}$ de nitrate d'uranyle et la phase légère est constituée par du phosphate de tributyle à 30% dans l'Hyfrane 120. On utilise un rapport phase aqueuse/ phase organique égal à 4 et on introduit la phase aqueuse à un débit de 48 l·h$^{-1}$, ce qui correspond à un débit spécifique total dans la colonne de 1 l·h$^{-1}$·cm$^{-2}$.

Lors du fonctionnement de la colonne, on effectue des prélèvements de phases à différents niveaux et on détermine dans ces prélèvements la teneur en uranium VI de la phase aqueuse et la teneur en uranium VI de la phase organique. Les résultats obtenus sont donnés dans le tableau qui suit.

Ces résultats montrent que la hauteur d'étage théorique moyen HETS calculée est de 1,2 m, soit pratiquement la même valeur qui celle obtenue lorsque l'on utilise des garnissages formés de disques et de couronnes comme dans FR-A 2 485 941 des plateaux à fentes ou des plateaux Krimmz, et une valeur légèrement inférieure à celle que l'on obtient avec des plateaux pleins perforés.

On remarque ainsi que le garnissage de l'invention présente une bonne efficacité, ce qui le rend intéressant pour une colonne dans laquelle on assure simultanément une électrolyse.

En effet, le fait de remplacer dans l'invention les plateaux perforés par des plateaux annulaires ne diminue pratiquement pas les performances de la colonne, mais permet de simplifier la construction et le montage de la colonne, de réduire les risques d'accumulation de produits de dégradation et d'éviter la présence d'isolants annulaires en céramique dans la partie active de la colonne.

Tableau

| Phase aqueuse | | | Phase organique | | |
|---|---|---|---|---|---|
| Niveau de pré-lèvement | Hauteur (en m) | [U VI] aqueux (g·l⁻¹) | Niveau de prélèvement | Hauteur (en m) | [U VI] organique (g·l⁻¹) |
| Entrée | | 17,80 | Sortie | | 56 |
| | 5,5 | 6,70 | | 5,5 | 50,80 |
| | 4,5 | 2,50 | | 4,5 | 29,60 |
| | 3,5 | 0,74 | | 3,5 | 10,90 |
| | 2,5 | 0,22 | | 2,5 | 3,65 |
| | 1,5 | 0,10 | | 1,5 | 1,06 |
| | 0,5 | 0,042 | | 0,5 | 0,44 |
| Sortie | | 0,019 | Entrée | | 0 |

## Revendications

1. Colonne pulsée annulaire comportant une enveloppe cylindrique externe (1) d'axe vertical dans laquelle est disposé un tube cylindrique (3) vertical délimitant à l'intérieur de ladite colonne avec l'enveloppe externe un espace annulaire (5) muni d'un garnissage pour la mise en contact à contre-courant de deux phases liquides de densités différentes, constituées respectivement par une phase lourde et par une phase légère, cet espace annulaire étant muni à son extrémité supérieure de moyens d'introduction (7) de la phase lourde et de moyens d'extraction (13) de la phase légère et à son extrémité inférieure de moyens d'introduction (11) de la phase légère et de moyens d'extraction (9) de la phase lourde, ledit garnissage étant constitué de plateaux annulaires (19) disposés horizontalement et espacés les uns des autres dans le sens vertical, caractérisé en ce que chacun desdits plateaux est en contact avec l'enveloppe externe (1) de la colonne et n'occupe qu'une partie de la section transversale dudit espace annulaire (5).

2. Colonne pulsée annulaire selon la revendication 1, caractérisée en ce que l'enveloppe cylindrique externe (1) et le tube cylindrique interne (3) sont reliés respectivement aux deux pôles d'un générateur de courant électrique de façon à réaliser simultanément une électrolyse.

3. Colonne selon la revendication 2, caractérisé en ce que les plateaux annulaires sont en matériau conducteur de l'électricité.

4. Colonne selon l'une quelconque des revendications 2 et 3, caractérisée en ce que les plateaux annulaires sont reliés entre eux par l'intermédiaire de tirants (21) en matériau conducteur de l'électricité qui assurent à la fois la cohésion mécanique du garnissage et la mise en contact électrique de l'ensemble des plateaux.

5. Colonne selon l'une quelconque des revendications 2 à 4, caractérisée en ce que le tube cylindrique interne comprend au moins trois couches superposées réalisées en matériaux conducteurs de l'électricité différents, ces trois couches étant constituées depuis l'extérieur du tube jusqu'a l'intérieur du tube par une première couche externe d'un métal noble résistant à la corrosion, par une seconde couche en matériau passivable lorsqu'il est polarisé anodiquement et par une troisième couche interne en matériau de résistivité électrique faible pour acheminer le courant électrique sur toute la longueur du noyau cylindrique.

6. Colonne selon la revendication 5, caractérisée en ce que le tube cylindrique constitue une anode composite comprenant une quatrième couche interne en matériau métallique présentant une bonne résistance mécanique.

7. Colonne selon l'une quelconque des revendications 5 et 6, caractérisée en ce que la première couche est en platine.

8. Colonne selon l'une quelconque des revendications 5 et 6, caractérisée en ce que la seconde couche est en tantale.

9. Colonne selon la revendication 6, caractérisée en ce que la troisième couche est en cuivre.

10. Colonne selon la revendication 6, caractérisée en ce que la quatrième couche est en titane ou en alliage de titane.

## Patentansprüche

1. Ringförmige Pulsierkolonne, enthaltend eine äußere zylindrische Umhüllung (1) mit vertikaler Achse, in der ein zylindrisches, vertikales Rohr (3) angeordnet ist, das im Innern der genannten Kolonne mit der äußeren Umhüllung einen ringförmigen Raum (5) ausbildet, der mit einer Auskleidung versehen ist, um im Gegenstrom zwei Flüssigphasen unterschiedlicher Dichte miteinander in Berührung zu bringen, die aus einer schweren Phase bzw. einer leichten Phase bestehen, wobei dieser ringförmige Raum an seinem oberen Ende mit Einführeinrichtungen (7) für die schwere Phase und mit Abzieheinrichtungen (13) für die leichte Phase versehen ist und an seinem unteren Ende mit Einführeinrichtungen (11) für die leichte Phase und Abzieheinrichtungen (9) für die schwere Phase versehen ist, wobei die genannte Auskleidung von ringförmigen Platten (19) gebildet ist, die horizontal mit gegenseitigen Abständen in vertikaler Richtung angeordnet sind, dadurch gekennzeichnet, daß jede der Platten mit der äußeren Umhüllung (1) der Kolonne in Berührung ist und nur einen Teil des Querschnitts des genannten ringförmigen Raums (5) einnimmt.

2. Ringförmige Pulsierkolonne nach Anspruch 1, dadurch gekennzeichnet, daß die äußere zylindrische Umhüllung (1) und das zylindrische innere Rohr (3) mit den zwei Polen eines elektrischen Stromgenerators verbunden sind, um simultan eine Elektrolyse auszuführen.

3. Kolonne nach Anspruch 2, dadurch gekennzeichnet, daß die ringförmigen Platten aus elektrisch leitfähigem Material bestehen.

4. Kolonne nach einem der Ansprüche 2 und 3, dadurch gekennzeichnet, daß die ringförmigen Platten untereinander mittels Stangen (21) aus elektrisch leitfähigem Material verbunden sind, die zugleich den mechanischen Zusammenhalt der Auskleidung und die elektrische Verbindung der Plattenanordnung sicherstellen.

5. Kolonne nach einem der Ansprüche 2 bis 4, dadurch gekennzeichnet, daß das innere zylindrische Rohr aus wenigstens drei übereinanderliegenden Schichten aus unterschiedlichen elektrisch leitfähigen Materialien besteht, wobei diese drei Schichten von außen nach innen aus einer ersten, äußeren Schicht aus einem korosionsfesten Edelmetall, einer zweiten Schicht aus einem bei anodischer Polarisierung passivierbaren Material und aus einer dritten, inneren Schicht aus einem Material geringen elektrischen Widerstands bestehen, um den elektrischen Strom über die gesamte Länge des zylindrischen Kerns zu führen.

6. Kolonne nach Anspruch 5, dadurch gekennzeichnet, daß das zylindrische Rohr eine zusammengesetzte Anode bildet, enthaltend eine vierte innere Schicht aus einem metallischen Material, das einen guten mechanischen Widerstand aufweist.

7. Kolonne nach einem der Ansprüche 5 und 6, dadurch gekennzeichnet, daß die erste Schicht aus Platin besteht.

8. Kolonne nach einem der Ansprüche 5 und 6, dadurch gekennzeichnet, daß die zweite Schicht aus Tantal besteht.

9. Kolonne nach einem der Ansprüche 5 und 6, dadurch gekennzeichnet, daß die dritte Schicht aus Kupfer besteht.

10. Kolonne nach Anspruch 6, dadurch gekennzeichnet, daß die vierte Schicht aus Titan oder einer Titanlegierung besteht.

**Claims**

1. Pulsed annular column comprising a vertically axed outer cylindrical enveloppe (1) in which is arranged a vertical cylindrical tube (3) defining within said column an annular space (5) with outer envelope, said space being provided with a lining for the countercurrent contacting of two liquid phases of different densities, respectively constituted by a heavy phase and by a light phase, said annular space being provided at its upper end with means (7) for introducing the heavy phase and means (13) for extracting the light phase and at its lower end with means (11) for introducing the light phase and means (9) for extracting the heavy phase, said lining being constituted by horizontally positioned, vertically spaced annular plates (19), characterized in that each of said plates is in contact with the outer envelope (1) of the column and only occupies part of the cross-section of said annular space (5).

2. Pulsed annular column according to claim 1, characterized in that the outer cylindrical envelope (1) and the inner cylindrical tube (3) are respectively connected to the two poles of an electric current generator, so as to simultaneously perform an electrolysis.

3. Column according to claim 2, characterized in that the annular plates are made from an electricity conducting material.

4. Column according to either of the claims 2 and 3, characterized in that the annular plates are interconnected via tie rods (21) made from an electricity conducting material ensuring both the mechanical cohesion of the lining and the electrical contacting of all the plates.

5. Column according to any one of the claims 2 to 4, characterized in that the inner cylindrical tube comprises at least three superimposed layers made from different electricity conducting materials, said three layers being constituted from the outside to the inside of the tube by a first outer layer of a noble corrosion-resisting metal, a second layer made from a material which is passivatable when anodically polarized and by a third inner layer made from a material with a limited electrical resistivity for advancing the electric current over the entire length of the cylindrical core.

6. Column according to claim 5, characterized in that the cylindrical tube constitutes a composite anode having a fourth inner layer made from a metallic material having a high mechanical strength.

7. Column according to either of the claims 5 and 6, characterized in that the first layer is of platinum.

8. Column according to either of the claims 5 and 6, characterized in that the second layer is of tantalum.

9. Column according to either of the claims 5 and 6, characterized in that the third layer is of copper.

10. Column according to claim 6, characterized in that the fourth layer is of titanium or a titanium alloy.

EP 0 193 434 B1

FIG. 1

FIG. 2